Europäisches Patentamt

European Patent Office

Office européen des brevets

(19)

(11) Veröffentlichungsnummer: **0 129 028**
**B1**

(12) **EUROPÄISCHE PATENTSCHRIFT**

(45) Veröffentlichungstag der Patentschrift :
25.03.87

(21) Anmeldenummer : 84104959.6

(22) Anmeldetag : 03.05.84

(51) Int. Cl.⁴ : **C 09 D   5/36**

(54) **Strahlungshärtbare Bindemittelsysteme, Verfahren zu ihrer Herstellung und dabei hergestellte Überzüge.**

(30) Priorität : 17.05.83 DE 3317882

(43) Veröffentlichungstag der Anmeldung :
27.12.84 Patentblatt 84/52

(45) Bekanntmachung des Hinweises auf die Patenterteilung : 25.03.87 Patentblatt 87/13

(84) Benannte Vertragsstaaten :
AT BE CH DE FR GB IT LI NL SE

(56) Entgegenhaltungen :
EP-A- 0 048 498
DE-A- 3 121 670
US-A- 2 851 370
Die Akte enthält technische Angaben, die nach dem Eingang der Anmeldung eingereicht wurden und die nicht in dieser Patentschrift enthalten sind.

(73) Patentinhaber : Merck Patent Gesellschaft mit beschränkter Haftung
Frankfurter Strasse 250
D-6100 Darmstadt (DE)

(72) Erfinder : Ohngemach, Jörg, Dr.
Taubenstrasse 6
D-6107 Reinheim 5 (DE)
Erfinder : Kieser, Manfred, Dr.
Händelstrasse 39
D-6100 Darmstadt 23 (DE)
Erfinder : Stahlecker, Otto
Frankfurter Landstrasse 36
D-6100 Darmstadt (DE)

EP 0 129 028 B1

## Beschreibung

Die Erfindung betrifft strahlungshärtbare Bindemittelsysteme, die ein oder mehrere durch Polymerisation und oder Vernetzung härtbare Monomere und/oder Präpolymere, gegebenenfalls einen Initiator sowie Pigmente und gegebenenfalls Farbstoffe, Füllstoffe und Additive enthalten. Solche Bindemittelsysteme werden bei der Herstellung von dekorativen Überzügen, insbesondere auf flächigen Materialien wie z. B. Papier, Holz, Metall und dergleichen, verwendet. Sie finden Anwendung in der Drucktechnik als photohärtbare Druckfarben oder zur Erzeugung von farblosen Lackierungen auf Etiketten, Schallplattenhüllen oder Buchumschlägen sowie bei der Lackierung von Blechen für Tuben-, Dosen- oder Flaschenverschlüssen, oder auch Keramikfliesen sowie Dacheindeckungen, wie z. B. die insbesondere in Japan verwendeten Dachziegel.

Zur Erzeugung von dekorativen Metallic-Effekten werden diesen Systemen sogenannte Bronzen aus Aluminium, Kupfer und ähnlichem zugesetzt. Diese als Bronzen bezeichneten Metallflitter werden speziellen Oberflächenbehandlungen unterzogen, um Wechselwirkungen mit den anderen Bestandteilen des Bindemittelsystems zu unterdrücken. Trotz dieses Aufwands haben Bindemittelsysteme, die solche Metallbronzen enthalten, nur eine geringe Dunkellagerstabilität, und es kann beobachtet werden, daß trotz der Abwesenheit von die Härtung auslösender Bestrahlung das System in relativ kurzer Zeit geliert und damit unbrauchbar wird.

Es bestand deshalb die Aufgabe, ein Bindemittelsystem zu finden, mit dem Beschichtungen mit Metallic-Effekt erzeugt werden können, das eine verbesserte Lagerstabilität aufweist. Eine weitere Aufgabe bestand darin, Bindemittelsysteme mit einer verkürzten Aushärtezeit zu finden.

Diese Aufgabe wurde durch Bereitstellung von Bindemittelsystemen gelöst, die anstelle von Metallbronzen Perlglanzpigmente enthalten.

Gegenstand der Erfindung sind daher strahlungshärtbare Bindemittelsysteme, enthaltend ein oder mehrere durch Polymerisation und/oder Vernetzung härtbare ungesättigte Monomere und/oder Präpolymere, gegebenenfalls einen die Härtung auslösenden Initiator, sowie Pigmente und gegebenenfalls Farbstoffe, Füllstoffe und Additive, die dadurch gekennzeichnet sind, daß als Pigment ein Perlglanzpigment enthalten ist.

Gegenstand der Erfindung ist auch ein Verfahren zur Erzeugung von dekorativen gehärteten Überzügen durch Aufbringen eines strahlungshärtbaren Bindemittelsystems und anschließendes Auslösen der Härtung durch UV- oder Elektronenstrahlung, das dadurch gekennzeichnet ist, daß ein Bindemittelsystem verwendet wird, das ein Perlglanzpigment enthält.

Schließlich sind Gegenstand der Erfindung auch strahlungsgehärtete Überzüge mit Metallic-Charakter, die dadurch gekennzeichnet sind, daß sie ein Perlglanzpigment enthalten.

Ein Hauptvorteil der erfindungsgemäßen Bindemittelsysteme ist deren wesentlich verbesserte Lagerstabilität, die es ermöglicht, die erfindungsgemäßen Systeme über einen längeren Zeitraum zu lagern, ohne daß sie durch vorzeitige Aushärtung, die sich durch langsame Viskositätszunahme, Gelieren und schließlich völliges Erstarren zeigt, unbrauchbar für die Beschichtung werden.

Abgesehen von dem Gehalt an Perlglanzpigment sind die erfindungsgemäßen Bindemittelsysteme auf übliche Weise zusammengesetzt. Wesentlicher Bestandteil dieser Systeme sind zur Polymerisation bzw. Vernetzung befähigte Verbindungen, die als Monomere oder Oligomere vorliegen. Solche Verbindungen sind beispielsweise äthylenisch ungesättigte Monomere wie z. B. Ester von Acryl- oder Methacrylsäure, Acrylnitril, Methacrylnitril, Acrylamid sowie N- und C-substituierte Acrylamide, Vinylester und sonstige Vinylverbindungen, Allylverbindungen und Mischungen solcher Monomere. Große Bedeutung haben auch ungesättigte Oligomere oder Polymere und deren Mischungen mit ungesättigten Monomeren. Dazu zählen thermoplastische Harze, die ungesättigte Gruppen, wie z. B. Fumarsäureester, Allylgruppen oder Acrylat- und Methacrylat-Gruppen enthalten. Als Oligomere, die in Verbindung mit einfach oder mehrfach ungesättigten Monomeren verwendet werden können, sind beispielsweise zu nennen : ungesättigte Polyester, ungesättigte Acrylharze sowie Isocyanat- oder Epoxy-modifizierte Acrylatoligomere, Urethane, Silicone, Aminpolyamidharze und insbesondere acrylierte Harze, wie z. B. acryliertes Siliconöl, acrylierte Polyester, acrylierte Urethane, acrylierte Polyamide, acryliertes Sojabohnenöl, acryliertes Epoxyharz und acryliertes Acrylharz.

Neben diesen allein auf Basis von organischen Monomeren und Oligomeren aufgebauten Bindemittelsystemen gibt es auch wäßrige Bindemittelsysteme, bei denen ein Oligomeres entweder in wäßriger Emulsion vorliegt, oder im Falle von wasserverdünnbaren Oligomeren als kolloidale Lösung. Bei diesen wäßrigen Systemen erfolgt die Einstellung der Viskosität nicht durch einen Gehalt an organischen Monomeren, sondern durch Wasser, was in manchen Fällen Vorteile hinsichtlich der durch flüchtige Monomere gegebenenfalls verursachte Gefahren besitzt.

Dem Fachmann sind alle diese Basismaterialien vertraut, und es ist ihm auch bekannt, wie durch die Auswahl und die Mischung dieser Materialien sowohl die Konsistenz des unpolymerisierten Gemisches als auch die Eigenschaften des gehärteten Harzes variiert werden können.

Die Bindemittelsysteme können beispielsweise durch Elektronenstrahlen gehärtet werden und benötigen dann keinen die Polymerisation (Härtung) auslösenden Initiator. Meist wird jedoch die Härtung durch Bestrahlung mit UV-Licht ausgelöst. Zu diesem Zweck werden Photoinitiatoren zugesetzt. Dies sind beispielsweise Benzoinderivate, insbesondere Benzoinäther, Dialkoxyacetophenone sowie die aus den DOS 27 22 264 und 28 08 459 bekannten Hydroxyalkylphenone, die den Monomeren und Präpolymeren in Mengen von etwa 0,05 bis 15 Gew.-% zugesetzt werden. Weiterhin können Co-Initiatoren zur Härtungsbeschleunigung zugesetzt werden, wie z. B. Amine, Phosphine oder Reduktionsmittel. Solche Co-Initiatoren sind beispielsweise aus der DOS 22 51 048 bekannt.

Strahlungshärtbare Bindemittelsysteme enthalten je nach ihrem Verwendungszweck daneben üblicherweise noch Additive, wie z. B. Füllstoffe wie Kieselsäure, Talkum oder Gips, Pigmente, Farbstoffe, Fasern, Thixotropiermittel, Verlaufshilfsmittel sowie gegebenenfalls Zusätze zum Schutz der Mischung vor einer vorzeitigen Polymerisation, wie z. B. Hydrochinon, Phenole, Naphthole oder Naphthylamine, zur Erhöhung der Lagerstabilität und zur Inhibierung von Luftsauerstoff. Alle diese Zusätze sind bekannt und werden in bekannter Weise eingesetzt.

Entscheidend für die Verbesserung der erfindungsgemäßen Bindemittelsysteme ist dagegen die Verwendung von Perlglanzpigmenten anstelle der bekannten Metallbronzen. Als Perlglanzpigmente geeignet sind im Prinzip alle Perlglanzpigmente, wie z. B. natürliches Fischsilber, basisches Bleicarbonat, Wismut-Oxychlorid, mit Metalloxiden beschichtete Glimmerplättchen oder auch plättchenförmige Metalloxide ohne Träger. Wegen des günstigen Preises, der geringen Toxizität, der hohen mechanischen Stabilität und der universellen Anwendbarkeit besonders bevorzugt sind mit Metalloxiden, insbesondere Titandioxid, beschichtete Glimmerschuppen, wie sie z. B. in den deutschen Patenten und Patentanmeldungen 14 67 468, 20 09 566, 22 14 545, 22 15 191, 22 44 298, 23 13 331, 24 29 762 und 25 22 572 beschrieben sind.

Die Pigmente werden in der Regel in Teilchengrößen von etwa 1 bis 200 μm eingesetzt, vorzugsweise etwa 5 bis 80 μm und insbesondere im Bereich von etwa 10 bis 50 μm. Für spezielle Zwecke können jedoch auch sehr große oder sehr kleine Teilchengrößen bevorzugt sein, wobei berücksichtigt werden muß, daß sehr große Teilchen etwa im Bereich von 200 μm einen sehr starken Metallglanz aufweisen, während sehr kleine Teilchen etwa im Bereich 1 bis 5 μm einen mehr seidenartigen Glanz besitzen. Bei der Auswahl der im Einzelfall verwendeten Perlglanzpigmente ist selbstverständlich auch die Dicke der zu erzeugenden Überzüge zu berücksichtigen.

Die Perlglanzpigmente sind in den erfindungsgemäßen Bindemittelsystemen in der Regel in einer Menge von etwa 0,2 bis 50 Gew.% enthalten, vorzugsweise in einer Menge von etwa 0,5 bis 30 Gew.%, wobei in den meisten Fällen der Gehalt im Bereich von etwa 0,5 bis 20 Gew.% liegt.

Die erfindungsgemäßen Bindemittelsysteme werden wie die bekannten Bindemittelsysteme durch einfaches Mischen der Komponenten hergestellt und sind unmittelbar zur Anwendung verfügbar. Dazu wird die Mischung in Form eines dünnen Überzugs auf das zu beschichtende Material aufgebracht und danach einer Strahlungsquelle ausgesetzt, insbesondere einer an kurzwelligem Licht reichen Lichtquelle, wie z. B. Quecksilberhoch-, -nieder- und -mitteldrucklampen, oder superaktinischen Leuchtstoffröhren, oder einer Quelle von Elektronenstrahlung.

Bei der Photohärtung zeigt sich ein weiterer Vorteil der erfindungsgemäßen Bindemittelsysteme. Während die mit den üblichen Metallbronzen pigmentierten Systeme relativ hohe Bestrahlungsdosen zur Härtung benötigen, wobei die notwendige Belichtungszeit mit zunehmendem Gehalt an Pigment noch stark ansteigt, wird zur Härtung der erfindungsgemäßen Systeme nur eine geringere Dosis gebraucht, die zudem kaum abhängig ist von der Menge des zugesetzten Pigments. Auf diese Weise wird mit den erfindungsgemäßen Systemen entweder bei gleicher Strahlungsleistung bzw. Bestrahlungsdauer eine höhere Härte des aufgebrachten Überzugs erzielt, oder es kann bei vorgegebener Härte mit einer wesentlich geringeren Strahlungsleistung gearbeitet werden. Es können so nach dem erfindungsgemäßen Verfahren in besonders vorteilhafter Weise qualitativ hochwertige Überzüge mit hervorragendem Metallglanz erzeugt werden.

## Beispiel 1

Zur Herstellung eines UV-härtbaren Lackes werden 184 g einer Mischung aus 80 Gewichtsteilen Hexandioldiacrylat und 120 Gewichtsteilen eines Polyesteracrylatharzes (Laromer(R) LR 8549 der Firma BASF) mit 10 g 2-Hydroxy-2-methyl-1-phenylpropan-1-on (Darocur(R) 1173 der Firma E. Merck) als Initiator und 6 g N-Methyldiethanolamin·als Co-Initiator versetzt und bis zur homogenen Verteilung gerührt. Durch Einrühren von 10 g eines silberfarbenen Glimme-/Titandioxid-Pigmentes in 90 g dieser Mischung erhält man einen sehr gut lagerstabilen Lack.

Zur Erzeugung eines gehärteten Überzuges wird dieser Lack in einer Schicktdicke von 120 μm auf Glasplatten aufgebracht und mit einer Bandgeschwindigkeit von 20 m/Minute durch ein Bestrahlungsgerät geschickt und durch Bestrahlung mit zwei Quecksilbermitteldrucklampen, die zusammen eine Lampenleistung von 120 Watt/cm besitzen, gehärtet. Der Belichtungsabstand beträgt etwa 10 cm. Die gehärteten Beschichtungen zeigen, vor einem schwarzen Hintergrund betrachtet, einen sehr guten Metallic-Effekt, der dem von mit Metallbronzen pigmentierten Lacken entspricht.

## Beispiel 2

In einem UV-härtbaren Bindemittelsystem, bestehend aus

130 g Reaktivharz VP S 1748 der Firma Degussa (= Reaktivharz auf Basis eines acrylierten Polyurethans),

70 g Pentaerythrittri(tetra)acrylat und

40 g Hexandioldiacrylat,

werden 60 g Iriodin® 302 Goldsatin der Firma E. Merck (ein Perlglanzpigment auf Basis Glimmer/TiO$_2$, Teilchengröße ca. 5-20 µm) unter Rühren dispergiert. Zur Initiierung der Photopolymerisation werden der agglomeratfreien Dispersion 20 g Darocur® 1664 der Firma E. Merck (eine Photoinitiatorkombination, bestehend aus Arylketonen) und 10 g N-Methylethanolamin als Co-Initiator zugefügt und eingerührt.

Das UV-härtbare System wird in einer Dicke von 60 µm auf einer Hart-PVC-Folie ausgezogen und mit einer Bandgeschwindigkeit von 10 m pro Minute in einem UV-Bestrahlungsgerät mit einer Lampenleistung von 120 Watt/cm bei einem Belichtungsabstand von ca. 10 cm bestrahlt.

Bei der Bestrahlungshärtung wird eine durchgehärtete, dekorative und (gold-)bronzefarbige Beschichtung mit trokkener Oberfläche erhalten.

## Beispiel 3

In einem UV-härtbaren Bindemittelsystem, bestehend aus

120 g Laromer® LR 8549 der Firma BASF (= ein monomerenfreies, ungesättigtes Polyesteracrylatharz) und

80 g Hexandioldiacrylat,

werden 60 g Biron® Silver CO der Firma Rona (eine Paste mit 70 % BiOCl als Perlglanzpigment) unter Rühren dispergiert. Zur Initiierung der Photopolymerisation werden der agglomeratfreien Dispersion 15 g Darocur® 1173 (1-(4-Isopropylphenyl)-2-hydroxy-2-methylpropan-1-on) der Firma E. Merck eingerührt.

Eine Probe des UV-härtbaren Systems wird in einer Dicke von 24 µm auf schwarzes Papier aufgebracht und mit einer Bandgeschwindigkeit von 5 m pro Minute in einem UV-Bestrahlungsgerät mit einer Lampenleistung von 80 Watt/cm bei einem Belichtungsabstand von etwa 10 cm bestrahlt.

Bei der Strahlungshärtung wird eine durchgehärtete, dekorative und silberglänzende Beschichtung mit trockener Oberfläche erhalten.

## Beispiel 4

In einem UV-härtbaren, wässrigen Bindemittelsystem, bestehend aus

80 g Laromer® LR 8576 der Firma BASF (= ca. 50 %ige Emulsion eines ungesättigten Acrylatharzes in Wasser),

12 g einer wässrigen Lösung mit 7,5 % Luvisko® K 90 der Firma BASF (= Polyvinylpyrrolidon) und 0,5 % Tylose® H 300 der Farbwerke Hoechst (= Hydroxyethylcellulose),

2 g n-Butanol,

1 g Marlopon® AT 50 der Chemischen Werke Hüls (= Triäthanolaminsalz der Dodecylbenzolsulfonsäure, 50 % aktive Substanz),

werden 5 g Iriodin® 100 Silberperl der Firma E. Merck (ein Perlglanzpigment auf Basis Glimmer/TiO$_2$, Teilchengröße etwa 10-50 µm) unter Rühren dispergiert. Zur Initiierung der Photopolymerisation werden der Dispersion 5 g Darocur® 953 (1-(4-Dodecylphenyl)-2-hydroxy-2-methyl-propan-1-on) der Firma E. Merck eingerührt.

Eine Probe des wässrigen, UV-härtbaren Systems wird in einer Dicke von 250 µm auf schwarzes Papier aufgebracht und 5 Minuten bei 100 °C getrocknet. Anschließend wird die wasserfreie Beschichtung mit UV-Strahlung bei einer Lampenleistung von 80 Watt/cm, einem Belichtungsabstand von etwa 10 cm und einer Bandgeschwindigkeit von 10 m pro Minute gehärtet.

Bei der Strahlungshärtung wird eine durchgehärtete, silberglänzende Beschichtung mit trockener Oberfläche erhalten.

## Beispiel 5

In 120 g PLEX® 6724-0 der Firma Röhm (= Mischung eines speziellen Methacrylat-Polymerisats mit UV-härtbaren Acrylaten und Vinylheterocyclen) werden 6,3 g Iriodin® 130 Glitzerperl der Firma E. Merck (= Perlglanzpigment auf Basis Glimmer/TiO$_2$, Teilchengröße etwa 15-130 µm) unter Rühren dispergiert. Zur Initiierung der Photopolymerisation werden in die agglomeratfreie Dispersion 6,3 g Darocur® 1173 der Firma E. Merck eingerührt.

Eine weiß eingefärbte, durchbohrte Polystyrol-Kugel (Durchmesser 2 cm) wird in das pigmentierte UV-härtbare System getaucht. Anschließend wird die beschichtete Kugel unter einem geeigneten UV-Strahler in etwa 5 Minuten unter ständigem Drehen mit UV-Strahlung gehärtet. Das Tauchen und UV-Härten wird zweckmäßigerweise noch einmal oder zweimal wiederholt.

Auf diese Weise wird eine dekorative, silbrig glitzernde Kugel erhalten, die gegebenenfalls noch mit einem UV-härtenden Klarlack beschichtet werden kann.

## Beispiel 6

Es wird genauso verfahren wie in Beispiel 5, nur daß anstelle von 6,3 g Iriodin® 130 Glitzerperl 6,3 g Iriodin® 300 Goldperl und daß anstelle der weiß eingefärbten Polystyrolkugel eine schwarz eingefärbte Polystyrolkugel gleicher Größe eingesetzt wird.

Bei Verwendung dieses Systems wird eine dekorative (gold-)-bronzefarbige Kugel mit trockener Oberfläche erhalten.

## Beispiel 7

Es wird, wie in Beispiel 5 beschrieben, ein UV-härtbares, pigmentiertes System hergestellt, in das jedoch anstelle von 6,3 g Iriodin® 130 Glitzerperl 7,9 g Iriodin® POL A 65 der Firma E. Merck (= Anteigung mit 65 % basischem Bleicarbonat als Perlglanzpigment) eingearbeitet werden.

Etwa 10 g des UV-härtbaren, pigmentierten Systems werden in einen gut entfetteten Glaskolben gegeben, der zum Befüllen einen Tubus trägt (Durchmesser der Glaskugel 6 cm ; Durchmesser des Tubus 1,5 cm). Durch ständige Drehbewegungen wird die Innenwand der Glaskugel benetzt. Der überschüssige Lack wird ausgegossen. Anschließend wird die Innenbeschichtung unter ständigem Drehen innerhalb von 10 Minuten unter einer Vitalux®-Lampe der Firma Osram mit UV-Strahlung gehärtet. Das Beschichten und das UV-Härten der Beschichtung kann so oft wiederholt werden, bis eine silberglänzende Glaskugel erhalten wird.

## Beispiel 8

In einem UV-härtbaren, wasserhaltigen Bindemittelsystem, das aus
50 g Purelast 145 der Firma Polymer System (= ein wasserlösliches Urethan-Acrylat-Oligomeres) und
50 g Wasser
besteht, werden 8,8 g Iriodin® 120 Glanzsatin der Firma E. Merck (ein Perlglanzpigment auf Basis Glimmer/TiO$_2$, Teilchengröße ca. 5-20 $\mu$m) unter Rühren dispergiert. Zur Initiierung der Photopolymerisation werden der agglomeratfreien Dispersion 2,6 g Darocur® 1173 der Firma E. Merck zugefügt und eingerührt.

Eine Probe des UV-härtbaren Bindemittelsystems wird in einer Dicke von 60 $\mu$m auf einer Glasplatte (10 × 10 cm) aufgetragen und mit einer Bandgeschwindigkeit von 0,5 m pro Minute in einem UV-Bestrahlungsgerät mit einer Lampenleistung von 120 Watt/cm und einem Belichtungsabstand von etwa 10 cm gehärtet.

Es wird eine Beschichtung auf Glas erhalten, die — vor einem schwarzen Untergrund betrachtet — ein silberfarbiges, seidenmattes Aussehen hat.

## Beispiel 9

In einem strahlungshärtbaren Bindemittelsystem, bestehend aus

81,0 g Actilane® 18 der Firma SNPE, Paris (= ein oligomeres, aromatisches Polyurethan-Acrylat)
39,0 g N-Vinylpyrrolidon
22,5 g Ethyldiglykolacrylat
7,5 g Hexandioldiacrylat
0,8 g Dow Corning® 193 Surfactant der Firma Dow Corning GmbH, München (= Silicon-Glykol-Copolymer als Netzmittel)

werden 37,7 g Iriodin® 500 Bronze der Firma Merck (= ein Perlglanzpigment auf Basis Glimmer/TiO$_2$, Teilchengröße 10-50 $\mu$m) unter Rühren dispergiert. Das Bindemittelsystem wird in einer Dicke von 120 $\mu$m (= Dicke des Naßfilmes) auf einer Hart-PVC-Platte ausgezogen und anschließend in einer Laboranlage, Typ ESH 150-020 der Firma Polymer Physik, Tübingen, unter folgenden Bedingungen im Elektronenstrahl gehärtet :

| | |
|---|---|
| Beschleuigungsspannung : | 150 kV |
| Elektronenstrom : | 12 mA |
| Auslenkung : | 10 × 22 cm |
| Vorschub : | 15,6 m/min |
| Strahlendosis : | 10 Megarad |
| Inertisierung : | mit Stickstoff |

**0 129 028**

Es wird eine durchgehärtete, dekorative gold-bronzefarbige Beschichtung erhalten.

Beispiel 10

In einem strahlungshärtbaren, wässerigen Bindemittelsystem, bestehend aus
160,0 g Laromer® LR 8576 der Firma BASF (= ca. 50 %ige Emulsion eines ungesättigten Acrylatharzes in Wasser, frei von organischen Lösungsmitteln und Monomeren)
4,0 g Butanol
4,0 g einer wässerigen Lösung mit 7,5 % Luviskol® K 90 der Firma BASF (= Polyvinylpyrrolidon) und 0,5 % Tylose® H 300 der Farbwerke Hoechst (= Hydroxyethylcellulose)
2,0 g Marlopon® AT 50 der chemischen Werke Hüls (= Triäthanolaminsalz der Dodecylbenzolsulfonsäure, 50 % aktive Substanz)

werden 30,0 g Iriodin® 100 Silberperl der Firma Merck (= ein Perlglanzpigment auf Basis Glimmer/TiO$_2$, Teilchengröße 10-50 μm) unter Rühren dispergiert.

Das Bindemittelsystem wird in einer Dicke von 120 μm auf einer Sperrholzplatte ausgezogen, die zuvor grundiert und geschliffen wurde. Um das Wasser aus der applizierten Beschichtung zu entfernen, wird 5 Minuten bei 100 °C getrocknet. Anschließend wird die wasserfreie Schicht in einer Laboranlage, Typ ESH 150-020 der Firma Polymer Physik, Tübingen, unter folgenden Bedingungen im Elektronenstrahl gehärtet:

| | |
|---|---|
| Beschleunigungsspannung : | 150 kV |
| Elektronenstrom : | 12 mA |
| Auslenkung : | 10 × 22 cm |
| Vorschub : | 15,6 m/min |
| Strahlendosis : | 10 Megarad |
| Inertisierung : | mit Stickstoff |

Es wird eine durchgehärtete, dekorative und silberglänzende Beschichtung mit trockener Oberfläche erhalten.

## Patentansprüche

1. Strahlungshärtbare Bindemittelsysteme, enthaltend ein oder mehrere durch Polymerisation und/oder Vernetzung härtbare ungesättigte Monomere und/oder Präpolymere, gegebenenfalls einen die Härtung auslösenden Initiator sowie Pigmente und gegebenenfalls Farbstoffe, Füllstoffe und Additive, dadurch gekennzeichnet, daß als Pigment ein Perlglanzpigment enthalten ist.

2. Strahlungshärtbare Bindemittelsysteme nach Anspruch 1, dadurch gekennzeichnet, daß etwa 0,2 bis 50 Gew.% eines Perlglanzpigments enthalten sind.

3. Strahlungshärtbare Bindemittelsysteme nach Anspruch 1 oder 2, dadurch gekennzeichnet, daß als Perlglanzpigment ein mit Metalloxiden beschichtetes Glimmerpigment enthalten ist.

4. Verfahren zur Erzeugung von dekorativen, gehärteten Überzügen durch Aufbringen eines strahlungshärtbaren Bindemittelsystems und anschließendes Auslösen der Härtung durch UV- oder Elektronenstrahlung, dadurch gekennzeichnet, daß ein Bindemittelsystem nach Anspruch 1 verwendet wird.

5. Verfahren nach Anspruch 4, dadurch gekennzeichnet, daß ein Bindemittelsystem nach Anspruch 2 verwendet wird.

6. Verfahren nach Anspruch 4, dadurch gekennzeichnet, daß ein Bindemittelsystem nach Anspruch 3 verwendet wird.

7. Strahlungsgehärtete Überzüge mit Metallic-Charakter, dadurch gekennzeichnet, daß sie ein Perlglanzpigment enthalten.

## Claims

1. Radiation-curable binder systems containing one or more unsaturated monomers and/or prepolymers curable by polymerisation and/or crosslinking, optionally an initiator which initiates the curing, as well as pigments, and, optionally, dyestuffs, fillers and additives, characterised in that the pigment contained therein is a pearlescent pigment.

2. Radiation-curable binder systems according to Claim 1, characterised in that they contain about 0.2 to 50 % by weight of a pearlescent pigment.

3. Radiation-curable binder systems according to Claim 1 or 2, characterised in that the pearlescent pigment contained therein is a mica pigment coated with metal oxides.

4. Process for producing decorative cured coatings by applying a radiation-curable binder system

6

and then initiating the curing by UV radiation or electron beams, characterised in that the binder system used is in accordance with Claim 1.

5. Process according to Claim 4, characterised in that the binder system used is in accordance with Claim 2.

6. Process according to Claim 4, characterised in that the binder system used is in accordance with Claim 3.

7. Radiation-cured coatings with metallic effect characteristics, characterised in that they contain a pearlescent pigment.

## Revendications

1. Systèmes d'agents liants durcissables par irradiation contenant un ou plusieurs prépolymères et/ou monomères insaturés durcissables par polymérisation et/ou réticulation, éventuellement un initiateur déclenchant le durcissement, ainsi que des pigments et éventuellement des colorants, des charges et des additifs, caractérisés en ce que, comme pigment, ils contiennent un pigment d'un lustre nacré.

2. Systèmes d'agents liants durcissables par irradiation selon la revendication 1, caractérisés en ce qu'ils contiennent environ 0,2 à 50 % en poids d'un pigment d'un lustre nacré.

3. Systèmes d'agents liants durcissables par irradiation selon la revendication 1 ou 2, caractérisés en ce que, comme pigment d'un lustre nacré, ils contiennent un pigment de mica enduit d'oxydes métalliques.

4. Procédé en vue de former des revêtements décoratifs durcis par application d'un système d'agent liant durcissable par irradiation et par déclenchement ultérieur du durcissement par irradiation à l'ultraviolet ou aux électrons, caractérisé en ce qu'on utilise un système d'agent liant selon la revendication 1.

5. Procédé selon la revendication 4, caractérisé en ce qu'on utilise un système d'agent liant selon la revendication 2.

6. Procédé selon la revendication 4, caractérisé en ce qu'on utilise un système d'agent liant selon la revendication 3.

7. Revêtements durcis par irradiation de nature métallique, caractérisés en ce qu'ils contiennent un pigment d'un luste nacré.